# EUROPÄISCHE PATENTANMELDUNG

(11) **EP 1 065 187 A1**
(43) Veröffentlichungstag der Anmeldung: **03.01.2001**
(21) Anmeldenummer: 00250213.6
(22) Anmeldetag: 28.06.2000
(51) Int. Cl.: C04B 28/02

(54) **Verfahren zur Herstellung einer hydraulisch gebundenen dünnflächigen Schutzschicht für die Instandhaltung von geschädigten Betonbauwerken, insbesondere von Stahlbetonkonstruktionen**

(30) Priorität: 29.06.1999 DE 19930577
(71) Anmelder: Lukas, Walter, Prof. Dr., A-6080 Igls (AT)
(72) Erfinder: Lukas, Walter, Prof. Dr., A-6080 Igls (AT)
(74) Vertreter: Zinken-Sommer, Rainer

(57) **Zusammenfassung**

Die Erfindung betrifft ein Verfahren zur Herstellung einer hydraulisch gebundenen dünnflächigen Schutzschicht für die Instandsetzung von geschädigten Betonbauwerken, insbesondere von Stahlbetonkonstruktionen.

Der Erfindung liegt die Aufgabe zugrunde, den Nachteil des Standes der Technik durch den Inhalt der Patentansprüche zu beseitigen. Insbesondere stand die Aufgabe, eine hydraulische gebundene Dünnflächenschutzschicht, die das Eindringen von CO₂ oder Chloridlösungen stark reduziert, mit hohem Dicht- und Haftvermögen zu entwickeln.

Dies wird erfindungsgemäß dadurch erreicht, daß
- als Bindemittel ein Gemisch aus Feinstzement und/oder Flugasche mit zusätzlichen Anregern und/oder Gesteinsmehl eingesetzt wird, dessen Kornanteil < 1µm bei 16 bis 35 M.-% und dessen Korndurchgang <10 µm bei 70 bis 100 M.-% liegt,
- und die Schutzschicht in einer Schichtdicke von 3 - 8 mm auf eine geschädigte und/oder karbonatisierte Betonfläche aufgetragen wird.

## Beschreibung

Die Erfindung betrifft ein Verfahren zur Herstellung einer hydraulisch gebundenen dünnflächigen Schutzschicht für die Instandsetzung von geschädigten Betonbauwerken, insbesondere von Stahlbetonkonstruktionen.

Betonbauwerke bekommen durch ihren Gebrauch großflächige Schäden an Oberflächen. Häufigste Schäden an bewehrten Betonbauten aus Stahlbeton oder Spannbeton sind Abwitterung infolge von Frost und Frost-Tausalz-Beanspruchung sowie Betonabplatzung infolge von Korrosion der schlaffen Bewehrung. Darüber hinaus treten oft herstellungs- und nutzungsbedingte Oberflächenfehler bei Beton auf, die zu Sekundärschäden an der Stahlbewehrung der Stahlkonstruktion führen. Die grundsätzlichen Ursachen der Schäden lassen sich in Gruppen einteilen, die von baupraktischer Bedeutung sind:
- Der konstruktive Entwurf zeigt Schwächen, wobei unzureichende konstruktive Ausbildung und ungeeignete Baustoffwahl zur Fehlerursache führen.
- Schäden durch Fehler, die bei der Bauausführung entstanden sind.
- Schäden, die infolge unplanmäßiger Beanspruchung bei einer Nutzung zurückzuführen sind.

Ziel der Maßnahme einer Instandsetzung besteht darin, den zum Zeitpunkt der Sanierung durchzuführenden Istzustand an den ursprünglichen vorgesehenen und infolge der Ausführungsmängel nicht erreichten Sollzustand zu erreichen bzw. Anpassung des Istzustandes an die gewünschte Nutzungsänderung bzw. an gestiegenen Umweltbelastungen anzupassen.

Grundsätzlich werden für die Instandsetzung von Bauwerksflächen 3 Werkstoffgruppen verwendet:
- Rein zementgebundenes Beton- oder Mörtelmaterial (Cement-Concrete = CC) in Ortbeton als BII nach DIN 1045 oder als Spritzbeton gern. DIN 18551, wobei Bindemittel und Zement zum Einsatz kommen. In der Regel werden auch hier größere Zuschlagstoffanteile (0 - 4 bzw. 0 - 22 mm) verwendet. Sie werden als Dichtbeschichtung ausgeführt. Verwendung findet auch normaler Portlandzement gem. ENV 198 C EM I bis C EM V.
- Kunststoffmodifizierte Zementmörtel oder Spachtelmassen (Polymer-Cement-Concrete = PCC), wobei als Bindemittel Zement und Kunststoffzusatz Verwendung findet mit Zuschlägen, die eine Körnung < 4 mm aufweisen mit Bevorzugung der Korngröße 1 - 2 mm. Diese Produkte werden in der Regel als Zusatzbeschichtungsmaterialien verwendet und als dritte Gruppe
- Kunstharzmörtel oder Spachtelmassen aus reinem Polymer (Polymer-Concrete = PC). Als Bindemittel wird Epoxidharz verwendet; als Zuschlag werden Anteile in der Regel an Quarzsand verwendet der Korngröße < 4 mm bevorzugt < 2 mm aufweist.

Zur Zeit werden für großflächige Sanierungsmaßnahmen und bei Schichtstärken zwischen 3 und 5 cm und darüber vorwiegend zementgebundene Spritzbetonmaterialien (Dickbeschichtungen) eingesetzt. In der letzten Zeit haben sich auch Reparatursysteme in Dünnbeschichtungen mit kunststoffmodifizierten hydraulischen Systemen (PCC-Materialien) als Einsatzzweck bewährt. Hier liegen genügend positive Erfahrungen vor, so daß für diese Materialien eine Einsatzschichtstärke zwischen 1 - 3 cm im Regelfall zur Anwendung kommen. Epoxidharzmörtel (PC-Mörtel) können mit einer Schichtstärke von 0,5 - 1,5 cm für Spezialfragen, insbesondere für die Herstellung bzw. Vergütung von Industriefußböden, Entwässerungs- und Kläranlagen verwendet werden.

In letzter Zeit wird das Problem der Sanierung von Betonfertigteilen, die als Fassadenelemente vorgehängt an Bauwerken angebracht sind, von Bedeutung. Bei diesen vorgesetzten Betonfertig-Elementen handelt es sich um Platten zwischen 6 und 10 cm Dicke.

Die Elemente weisen schlaffe oder Matten-Bewehrung auf. Durch die geringe Stärke und die mangelnde Betonqualität sind solche Bauteile vollkommen durchkarbonatisiert, zumindest sehr große Bereiche dieser angeführten Schichtstärken. Zur Verbesserung der Korrosionssituation der Bewehrung bzw. zur Verminderung der Fortschreitung der Kabonatisierung werden an diesen Systemen in der Regel kunststoffmodifizierte Materialien aufgebracht. Reine zementgebundene Produkte können entweder als Ortbeton bzw. Spritzbeton aus mehreren Gründen nicht aufgebracht werden. Hier stellt insbesondere die Dicke der aufzutragenden Schichten und die Verfahrenstechnik der Applizierung ein großes Hindernis dar.
Mittels Spritzbetonverfahren bzw. Ortbetonverfahren lassen sich Produkte in Schichtstärken ab 2,5 cm auftragen, um die nötige Korrosionsschutzwirkung sicherzustellen bzw. zu erreichen. Der aufgebrachte Gewichtsanteil beträgt bei diesen Schichtstärken zwischen 50 und 120 kg/m². Aus statischen Gründen läßt sich auch bei geringer Schichtstärke kein so hohes Gewicht zusätzlich anbringen, da ein Versagen der Befestigungselemente befürchtet werden muß. Aus diesem Grund werden für die Art der Sanierung vorwiegend stark kunststoffmodifizierte Materialien verwendet, die eine Schichtstärke zwischen 3 und 10 mm im Auftrag erlauben.

Neuere Untersuchungen auf dem Gebiet der bereits sanierten Flächen haben ergeben, daß die gewünschte Korrosionsschutzwirkung bei ausschließlich kunststoffvergüteten Dünnschichten nicht gegeben ist und zusätzlich Haftzugsprobleme festzustellen sind, also grundsätzlich ein Versagen feststellbar ist. Dies bedeutet, daß die Korrosion nur begrenzt durch die Maßnahmen erreicht wird. Auch ist eine zusätzliche nachträgliche Re-Alkalisierung nicht feststellbar. Es müssen somit die Wege der Sanierung über kunststoffmodifizierte Dünnbeschichtungen in Frage gestellt werden.

Die Ursache des Versagens kann wie folgt zusammenfassend beschrieben werden:

Normalerweise wird der Korrosionsschutz des Bewehrungsstahles in Stahlbeton bzw. Stahlbetonbauten durch die Alkalität des Beton-Porenwassers und die sich daraus ergebende Passivierung am Stahl gewährleistet.

Dieser Korrosionsschutz am Stahl kann nur dann eintreten, wenn die Stahloberfläche von alkalischem Milieu vollständig umhüllt wird. Eine längerfristige Beständigkeit des Korrosionsschutzes ist an die Stabilität der Passivierung gebunden. In Abhängigkeit der Betonqualität, der Bauausführung und der konstruktiven Gestaltung kann durch die Umgebungsbedingungen die passivierende Wirkung des Beton-Bohrenwassers aufgehoben werden, wodurch eine Korrosion des Stahles eintritt. Durch das Eindringen von Chlorid-Ionen und CO₂ der Luft in Verbindung der daraus resultierenden Karbonatisierung des in unmittelbar des Stahls befindlichen Betons ergibt sich eine Verstärkung der Anforderung der Passivierung und somit der Korrosionsreaktion. Darüber hinaus sind zur Injektion und zum Verpressen von Rissen und Hohlräumen in Steinmaterial/Feinstzement-Bindemittelmischungen bekannt, die ein Eindringen des Gemisches in selbst kleinste Poren- und Hohlräume durch eine hohe Mahlfeinheit garantieren, So ist z. B. eine Feinstzement-Bindemittelmischung sowie ein Verfahren zur Herstellung derselben bekannt, bei der das Quellvermögen dieser Feinstbindemittel zur Rißinjektage gezielt ausgenutzt wird (DE 44 28 692).

Außerdem sind ein Injektionsmittel sowie daraus hergestellte Suspensionen bekannt, die feinste Bindemittel- und Füllstoffanteile zur Verminderung der Durchlässigkeit von Böden, Fels und Betonkonstruktionen einsetzen (DE 195 37 616). Das Injektionsmittel weist zusätzlich Stabilisierer, organische Verdickungsmittel und Erhärtungsbeschleuniger auf. Die Kornanteile im Feinstbereich sind bei allen Injektionsmitteln stetig und abgestuft. Kornanteile unter 1 µm sind im minimalen Bereich angesiedelt und selten.

Der Einsatz von Feinstzement-Mischungen zur großflächigen Bauwerksflächensanierung ist nicht bekannt und mit den herkömmlichen Mischungen auch nicht möglich (schlechte Haftung, keine Dichtheit).

Der Erfindung liegt die Aufgabe zugrunde, den Nachteil des Standes der Technik durch den Inhalt der Patentansprüche zu beseitigen. Insbesondere stand die Aufgabe, eine hydraulisch gebundene Dünnflächenschutzschicht, die das Eindringen von CO₂ oder Chloridlösungen stark reduziert, mit hohem Dicht- und Haftvermögen zu entwickeln.

Dies wird erfindungsgemäß dadurch erreicht, daß
- als Bindemittel ein Gemisch aus Feinstzement und/oder Flugasche mit zusätzlichen Anregern und/oder Gesteinsmehl eingesetzt wird, dessen Kornanteil < 1µm bei 16 bis 35 M.-% und dessen Korndurchgang < 10 µm bei 70 bis 100 M.-% liegt,
- und die Schutzschicht in einer Schichtdicke von 3 - 8 mm auf eine geschädigte und/oder karbonatisierte Betonfläche aufgetragen wird.

Es wird ein dünner CO₂ und wasserdichter Zementmörtel in Stärken von 3 - 8 mm auf den karbonatisierten bzw. geschädigten Betonflächen aufgetragen. Die Aufgaben dieses Materials besteht darin, daß eine starke Verhinderung der CO₂-Diffusion durch die Reduzierung des Kapillar- und Gelporengefüges angestrebt wird. Dieses läßt sich nach den vorliegenden Erkenntnissen so erzielen, daß man die Kornzusammensetzung des Gemisches im Feinstbereich nach den, in weiteren dazu gestellten Überlegungen, abgestimmt. Für die Praxis bedeutet dies, daß auch eine definierte Kornzusammensetzung im unteren Bereich möglichst nach physikalisch bestimmten Gesichtspunkten erzeugt wird. Die Kornzusammensetzung von herkömmlichen Zementen, die in Mörtel verwendet werden, liegt zur Zeit im Bereich von 1 µm deutlich unter 15 M-% bzw. bei 10 µm bei 60 M-%.

Überraschenderweise hat sich herausgestellt, daß sehr geringe CO₂-Diffusion auftritt, wenn das Körnungsband unter 1 µm stark angehoben wird. Gleichzeitig muß der Anteil der Körnung bis 10 µm gesenkt werden. Bisherige Erfahrungen deuten daraufhin, daß der Anteil des/der Zemente(s) im Bindemittelgemisch unter 1 µm zumindest 20 M-% betragen sollte, um günstige Ergebnisse zu erreichen. In der Praxis bedeutet dies, daß die CO₂-Diffusion (CO₂-Diffusionswiderstand) ähnliche Werte aufweist, wie sie kunststoffvergütete Produkte haben. Der hier entstehende Porenanteil - im wesentlichen Kapillar- und Gelporen - der eine CO₂-Diffusion stark verhindert, wird sehr deutlich verringert. Messungen zeigen bei Produkten bei einer aufgetragenen Stärke von 3 - 5 mm nach einer intensiven Belastung mit CO₂ eine genügende Calcium-Hydroxid-Reserve, um eine nötige Potentialreserve für die Aufrechterhaltung einer ausreichenden Passivität über einen längeren Zeitraum (20 - 50 Jahren) zu gewährleisten.

Der hohe Feinanteil des Zementes bewirkt neben der geringen Kapillarporosität auch eine stärkere Erhöhung der Festigkeit sowie auch andere technische Werte. Ein wesentlich ungünstiger Einfluß ergibt sich beim Schwinden. Zur Behebung - insbesondere des letztgenannten Faktors - können feine latenthydraulische Stoffe zugesetzt, gemahlen oder homogenisiert werden. Anteile über 30 M-% haben sich positiv herausgestellt.

Anhand eines Ausführungsbeispieles soll nachstehend die Erfindung näher erläutert werden.

Das Gemisch zur Dünnbeschichtung von geschädigten Betonbauwerken setzt sich aus herkömmlichen Bindemitteln, vorzugsweise Portlandzementen, Feinstzementen und/oder Flugasche mit zusätzlichen Anregern und/oder Gesteinsmehl sowie Zuschlagstoffen und Wasser zusammen.

Betrachtet man nur die festen Bestandteile des Gemisches, sollten die o. g. Stoffe folgende Kornzusammensetzung (Durchgänge in %) aufweisen:

| | 1 | 4 | 8 | 10 Micron |
|---|---|---|---|---|
| Zement PZ 55 | 12 | 46 | 58 | 64 |
| Feinstzement A | 18 | 68 | 95 | 100 |
| Feinstzement B | 25 | 88 | 100 | - |
| gemahlenes Gesteinsmehl | 22 | 76 | 98 | 100 |

Die Zusammensetzung der Bindemittel erfolgt derart:

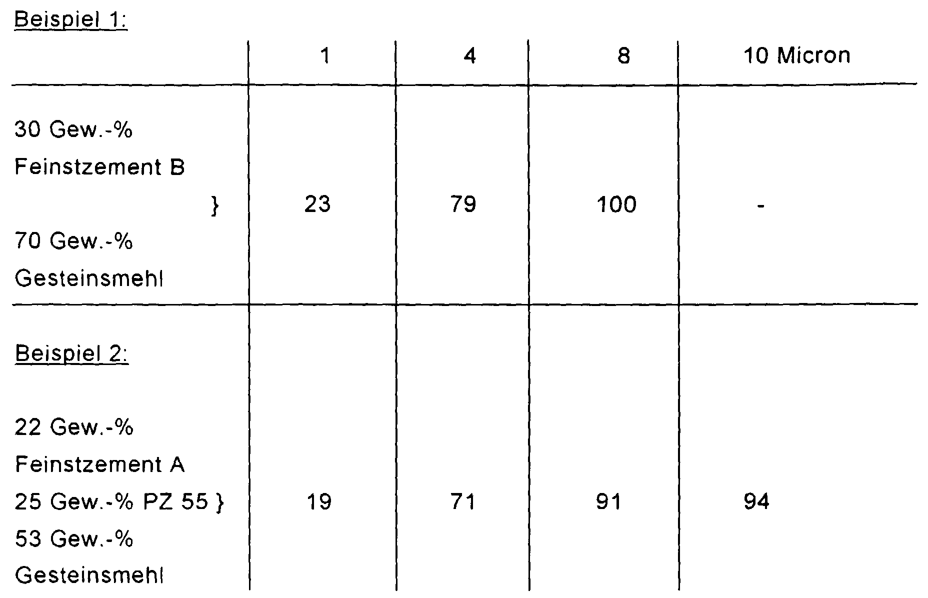

Damit ergeben sich beispielsweise folgende Mörtelzusammensetzungen für Dünn beschichtungen:
- 18 Gew.-% Bindemittel nach Beispiel 1
- 82 Gew.-% Zuschlagstoff von 0/2 mm Korngröße
- 1 Gew.-% Fließmittel (Basis Hochleistungsverflüssiger - Dosierung bezogen auf Bindemittel)
- W/B-Wert 0,505

Diese Mörtelzusammensetzung ist trotz niedrigem W/B-Wert besonders gut geeignet für das Auftragen im Spritzverfahren (8 mm), da ein Hochleistungsverflüssiger verwendet wird.
- 14 Gew.-% Bindemittel nach Beispiel 1
   2 Gew.-% Zuschlagstoffanteil im Körnungsband von 0 - 10 Micron
- 84 Gew.-% Zuschlagstoff von 0/2 mm Korngröße
- ohne Fließmittel
- W/B-Wert incl. Zuschlagstoffeanteil (2 %) 0,685

Dieses Gemisch ist insbesondere gut für den Auftrag im Spachtelverfahren einsetzbar, da es einen hohen Feinanteil bei geringer Konsistenz (Ausbreitmaß des Bindemittels bei 19 cm) aufweist.
- 20 Gew.-% Bindemittel nach Beispiel 2
- 80 Gew.-% Zuschlagstoff von 0/1 mm Korngröße
- 1,8 % Fließmittel (Basis Naphtalin)
- W/B-Wert 0,600

Das letztgenannte Gemisch eignet sich aufgrund eines hohen Feinanteiles besonders für den Auftrag im Spachtelverfahren.

## Patentansprüche

1. Verfahren zur Herstellung einer hydraulisch gebundenen dünnflachigen Schutzschicht für die Instandsetzung von geschädigten Betonbauwerken, insbesondere von Stahlbetonkonstruktionen, durch Vermischen von Bindemitteln, Zuschlagstoffen, Zusatzstoffen und Wasser,
**gekennzeichnet dadurch,** daß
- als Bindemittel ein Gemisch aus Feinstzement und/oder Flugasche mit zusätzlichen Anregern und/oder Gesteinsmehl eingesetzt wird, dessen Kornanteil < 1µm bei 16 bis 35 M.-% und dessen Korndurchgang < 10 µm bei 70 bis 100 M.-% liegt,
- und die Schutzschicht in einer Schichtdicke von 3 - 8 mm auf eine geschädigte und/oder karbonatisierte Betonfläche aufgetragen wird.

2. Verfahren nach Anspruch 1, gekennzeichnet dadurch, daß die Zuschlagstoffe in einem Körnungsband von 0/4 mm, vorzugsweise 0/1 und/oder 0/2 mm, eingesetzt werden.

3. Verfahren nach Anspruch 2, gekennzeichnet dadurch, daß der Feinstbindemittelanteil an der Gesamtmischung auf 8 - 40 M %, vorzugsweise 12-25 M %, eingestellt wird.

4. Verfahren nach Anspruch 3, gekennzeichnet dadurch, daß zur Vermeidung von Schwindrissen als Zusatzstoff Fasern und/oder andere Schwindkompensatoren in organischer und/oder anorganischer Form eingesetzt werden.

5. Verfahren nach Anspruch 4, gekennzeichnet dadurch, daß die Schutzschicht mittels eines Trocken- oder Naßspritzverfahrens aufgespritzt, gespachtelt oder gerollt aufgetragen wird.

6. Verfahren nach Anspruch 1 bis 5, gekennzeichnet dadurch, daß ein Wasserbindemittelwert (W/B) von 0,4 - 0,7, vorzugsweise 0,5 - 0,6, über Fließmittel eingestellt wird.
